# EUROPEAN PATENT APPLICATION

(11) **EP 4 822 516 A1**
(43) Date of publication of application: **14.10.2026**
(21) Application number: 25169999.7
(22) Date of filing: 11.04.2025
(51) Int. Cl.: G06F 5/01, G06F 7/483, G06F 7/544, G06F 17/16, G06N 20/00

(54) **MULTIPLY-ACCUMULATE METHOD AND UNIT FOR MACHINE LEARNING**

(71) Applicant: Forschungszentrum Jülich GmbH, 52428 Jülich (DE)
(72) Inventor: RANA, Dr. Vikas, 52428 Jülich (DE); ISSAC, Dr. Tom Glint, 52428 Jülich (DE)
(74) Representative: Gille Hrabal Partnerschaftsgesellschaft mbB Patentanwälte

(57) **Abstract**

The invention relates to a computer-implemented multiply-accumulate method for machine learning, a computer program, a computer-readable medium, a data carrier, a data carrier signal, a multiply-accumulate unit for machine-learning applications, and an electronic device. A computer-implemented multiply-accumulate method (8) for machine learning comprises accessing (44) a plurality of input values (40), the input values (40) being coded in a floating-point number format (1) having an exponent (3) and a mantissa (4), performing multiplications (45) to obtain products, aligning (46) the mantissas (4) to a common exponent (3), and performing at least one addition (47) to obtain a sum (43).

## Description

The invention relates to a computer-implemented multiply-accumulate method for machine learning, a computer program, a computer-readable medium, a data carrier, a data carrier signal, a multiply-accumulate unit for machine-learning applications, and an electronic device.

Machine learning requires a high amount of computational power and energy. Therefore, there is a need for increased efficiency in machine-learning applications, regarding both hardware and software aspects.

One way to increase efficiency is to reduce the number of bits used to represent numbers. To this end, the inventors of the present invention have also suggested a novel floating-point number format which requires a reduced number of bits to precisely encode numbers used in machine-learning applications.

Multiply-accumulate (MAC) operations are another starting point to increase efficiency. MAC operations are a basic calculation operation used in machine learning and other types of digital data processing. Typically, two factors are multiplied and the product is added to an accumulator. In machine-learning operations, high numbers of MAC operations are used, leading to a high demand in computing power and high energy consumption. Especially for complex inference methods, computing power may represent a bottleneck. Therefore, there is a need for increased efficiency in MAC operations, regarding both hardware and software aspects.

The task of the invention is to improve multiply-accumulation operations. In particular, at least parts of the mentioned disadvantages should be overcome.

The task is solved by the method of claim 1 as well as the computer program, the computer-readable medium, the data carrier, the data carrier signal, the multiply-accumulate unit, and the electronic device according to the additional claims. Preferable embodiments are given in the subclaims.

A computer-implemented multiply-accumulate method for machine learning serves to solve the task. The method comprises:
- Optionally accessing a plurality of input values, the input values being coded in a floating-point number format having an exponent and a mantissa,
- Performing multiplications to obtain products,
- Aligning mantissas to a common exponent, and/or
- Performing at least one addition to obtain a sum.

The alignment of the mantissas is in particular a pre-alignment. This means that alignment is performed prior to addition. This allows for delayed normalization and reduced number of normalization operations. Normalization is not required for each input value. Normalization is not required during addition. Thus, the number of operations is significantly reduced. A quick and easy multiply-accumulate operation is possible using a floating-point number format in contrast to the conventionally used fixed-point format. Hardware complexity is reduced by minimizing exponent comparisons and shifts and eliminating redundant operations. Thus, latency is decreased, a higher throughput is achieved, improving pipeline efficiency, and power consumption is reduced.

In the sense of the invention, accessing is a broad term. The input values may be stored in advance in a memory of a computing unit, for example, such as a buffer. The input values may be transmitted to a computing unit in the floating-point number format or in a different number format and subsequently transformed into the floating-point number format. It is only required for a computing unit to have access to the input values in the floating-point number format. No transmission is required, let alone transmission in a floating-point number format. However, preferably, the values are transmitted to a computing unit and/or received by the computing unit in the floating-point number format.

Multiplications are performed to obtain products. In particular, input values are multiplied. Multiplication is in particular performed by multiplying the mantissas and/or adding the exponents of respective values.

In particular, two respective input values are multiplied. In particular, pairwise multiplication is performed.

Multiplication may be performed using the following formula: ${M}_{out} = {M}_{A} ∗ {M}_{B} or {M}_{out} = M {′}_{A} ∗ M {′}_{B}$ with M_{A} and M_{B} being two exemplary mantissas of two exemplary values, Mₒᵤₜ being the product of the mantissas, and M'_{A} and M'_{B} being aligned mantissas of two exemplary values.

If alignment is performed prior to multiplication, exponents of the values can be disregarded during multiplication. Only mantissas are then used.

The mantissas are aligned to a common exponent. When the exponent of a value is changed, the respective mantissa typically shifts accordingly. In particular, mantissas of the products are aligned to a common exponent. After alignment, all mantissas have the same exponent. Any exponent may be chosen. The exponent can be an exponent of one or more of the mantissas or a different exponent.

Aligning the mantissas may be performed using the following formulas: $M {′}_{A} = {M}_{A} ∗ {2}^{\left({E}_{A}-{E}_{max}\right)} , M {′}_{B} = {M}_{BA} ∗ {2}^{\left({E}_{B}-{E}_{max}\right)} , … , M {′}_{n} = {M}_{n} ∗ {2}^{\left({E}_{n}-{E}_{max}\right)}$ with M'_{A,B,n} being an aligned mantissa of value A, B, n; M_{A,B,n} being the mantissa of input value A, B, n; E_{A,B,n} being the exponent of input value A, B, n; Eₘₐₓ being the maximum exponent of all n input values or the maximum possible exponent (highest possible exponent); n being the number of input values, in particular of one array of input values. The respective formulas can be adapted for each further value of n.

In this formula, Eₘₐₓ is used in an exemplary manner to align the mantissas. However, as described above and below, other exponents may be used to align the mantissas.

At least one addition is performed to obtain a sum. This may also be referred to as accumulation. In particular, a plurality of additions is performed to obtain a sum. In particular, all products are added.

Addition can be performed using the following formula: $S = {\sum }_{i = 1}^{n} {M}_{{out}_{i}} ,$ with n being the number of input values, in particular of each array of input values, S being the sum and *M_{outᵢ}* being the respective product of two mantissas.

In particular, addition is performed without intermediate normalization. This means that, in case of a stepwise addition, no normalization is performed between the addition steps. No exponent adjustment is required, as all products are pre-aligned.

Addition can be performed by adding only the mantissas. The exponents can be disregarded due to the pre-alignment. The accumulation scheme can therefore be regarded as a fixed-point accumulation scheme, despite it using a floating-point format.

Addition can be performed as carry-save addition. This leads to a high efficiency. Multiple partial products can be added without immediate carry propagation.

The method and/or the corresponding computer program controls a computer's internal functioning and operation, as a great part of previously necessary operations can be omitted. Thus, the processor load is significantly reduced. The invention also relates to a method and program for processing code at low level, as MAC is a fundamental operation, and a great number of values and calculations is not required. This contributes to producing the further technical effect of significantly limiting the resources needed.

In one embodiment, aligning the mantissas to a common exponent is performed after multiplication and/or prior to addition. In other words, the products are transformed by aligning the mantissas. Subsequently, the transformed products are added to obtain the sum. This leads to a reduced number of alignments required. However, it is generally also contemplated that the mantissas of the input values may be aligned prior to multiplication and/or that alignment is performed before multiplication as well as after multiplication.

The method according to the invention is suitable for machine-learning operations. In one configuration, the method is for use in a machine-learning model, part of a machine-learning model and/or performed in a machine-learning operation, for example during training or inference. However, the method is generally suitable for all kinds of electronic, in particular digital signal processing, for example in image processing, filtering, in control technology, etc. Accumulation can be used to calculate integration; multiplication can be used for weighing or to consider a differential of a function, for example. The same applies to the multiply-accumulate unit.

The machine-learning model may be a neural network such as a convolutional neural network or a large language model, for example. In particular, the machine-learning model is a quantized neural network which is ideal for architectures where numerical precision can be strategically reduced without compromising performance.

In one embodiment, addition is performed in successive addition steps. In one embodiment, each addition step comprises pairwise addition.

In particular, no normalization is performed prior to addition. In particular, no normalization is performed after a first addition step and/or before a second addition step. In particular, no normalization is performed after the second addition step and/or before a third addition step, and so on. In particular, no normalization is performed before the last addition step.

The resulting adder tree can be referred to as binary tree, as two values are added in every step. This reduces the depth of addition and minimizes propagation delay. This embodiment leads to an efficient and scalable addition.

In one configuration, an intermediate value is registered or stored in a pipeline register, for example during or after addition. Such a pipeline register may optionally be provided between two stages, for example between two addition steps, to improve throughput and/or reduce delay such as critical path delay. Speed differences may be compensated.

In one embodiment, the method further comprises normalizing the sum to obtain a normalized floating-point value.

Normalizing is typically performed to obtain a floating-point value in which the point is between the first and second and/or most significant bits. In a normalized value, in particular, the first two and/or most significant bits are different. Normalizing may include reducing the number of mantissa bits and/or exponent bits used. In particular, the resulting floating-point number format has the same number of mantissa bits and exponent bits as the input values. Normalizing typically includes changing both mantissa and exponent. In the mantissa, the point is shifted by a specific number, and the exponent is incremented accordingly.

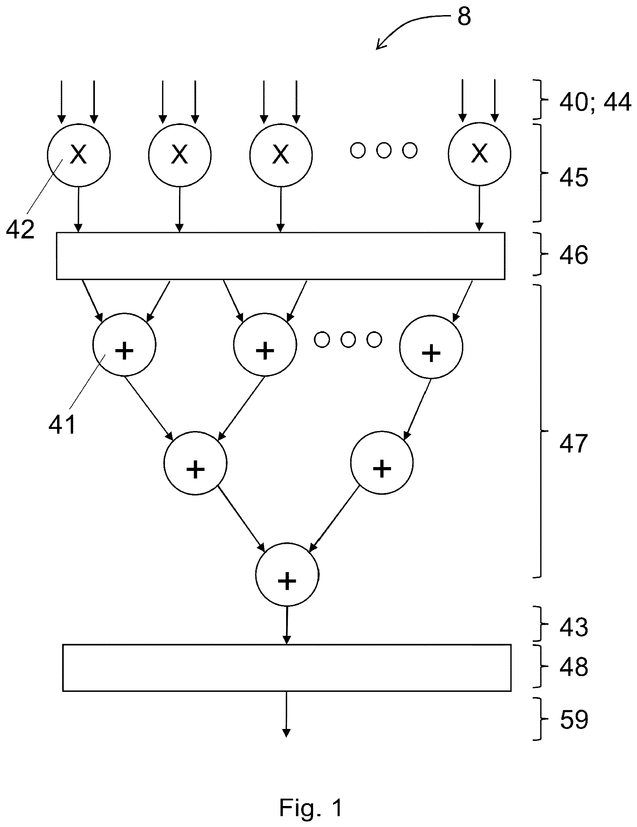

Through multiplication and in particular addition, the bitwidth or precision of numbers and therefore the memory requirements increase. When multiplying and/or adding a large number of values, large exponents and mantissas arise (for more details see also the description of Figure 1 below). Normalizing reduces the bitwidth or precision again. This is preferable for further processing.

In particular, the floating-point value after normalization is the same as the floating-point value in which the input values are coded. In particular, values are always stored in a floating-point number format.

For example, normalizing can be performed by Leading One Detection (LOD) and/or using the following formula: ${E}_{final} = {E}_{max} + LOD shift ,$ with E_{final} being the final exponent, Eₘₐₓ being the maximum exponent and LOD (leading one detection) shift being the number of point shifts (in particular to the left) required until the point is between the first and second and/or most significant bits.

In particular, the mantissa is normalized by shifting appropriately. In particular, the mantissa is truncated and/or quantized, for example to 4 bits, 3 bits or 2 bits.

In particular, the floating-point number format is a 7-bit format, a 6-bit format, or, preferably, a 5-bit format. This means that the specified bitwidth is used for encoding or storing the number. Small-bitwidth or low-precision numbers allow for a very time-, energy- and resource-efficient calculations.

In one embodiment, in the floating-point number format, the number of exponent bits is at most 4, in particular at most 3, more particularly 2. In case of 2 exponent bits, the exponent is encoded with two bits. Thus, there are at least four different exponent values which can be encoded.

In one embodiment, in the floating-point number format. the number of mantissa bits is at most 4, in particular at most 3, more particularly 2. In case of 2 mantissa bits, the mantissa is encoded with two bits. Thus, there are at least four different mantissa values which can be encoded.

It has been shown that the given numbers are minimum numbers to arrive at a certain accuracy which is sufficient and advantageous for most applications.

In particular, the number format further comprises at least one, in particular exactly one sign bit. The sign bit determines the polarity of the number. Typically, 0 is for positive numbers and 1 is for negative numbers.

The number format may be according to the following formula: $F = {\left(-1\right)}^{S} ∗ \left(1+M\right) ∗ {2}^{\left(E+B\right)} ,$ with F being the number to be represented, S being the sign, M being the mantissa, E being the exponent, and B being the bias. The mantissa number format may be according to the following formula: $M = MSB ∗ {2}^{- 1} + LSB ∗ {2}^{- 2} ,$

with M being the mantissa, MSB being the most significant bit of the mantissa and LSB being the least significant bit of the mantissa.

In particular, the aforesaid relates to the floating-point number format of the input values and/or to the floating-point number format after normalizing.

In one embodiment, the exponent of the floating-point number format is asymmetrically biased. In particular, the exponent is asymmetrically biased around zero. For example, the exponent is biased such that a difference between an absolute value of a negative exponent having the maximum absolute value and an absolute value of a positive exponent with the maximum absolute value is at least 2. Therefore, the numbers above 1 and the numbers between 0 and 1 are encoded with a different precision or resolution. For example, if the exponent is encoded with 2 bits, there are 4 values which can be stored, 0, 1, 2, and 3. In order to be asymmetrically biased around zero, the bias can by any number except for -1 (which would result in -1, 0, +1, +2, where |-1| = 1 and |2| = 2, thus the difference between the negative exponent with the maximum absolute value is 1) or -2 (which would result in -2, -1, 0, +1, where |-2| = 2 and |1| = 1, where the difference between the negative exponent with the maximum absolute value is also 1).

In one configuration, the mantissas are aligned to the highest possible exponent. In this configuration, alignment is performed as quickly as possible. However, depending on the input values, precision may be reduced, in particular if significantly different exponents are present. A smaller buffer is required to align the mantissas.

In one embodiment, the method further comprises determining the highest exponent of the input values. In particular, the mantissas are aligned to the determined highest exponent. This embodiment ensures a higher precision.

Determining the maximum exponent may be performed by ${E}_{max} = max \left({E}_{A},{E}_{B},…,{E}_{n}\right) ,$ with Eₘₐₓ being the highest exponent and E_{A}, E_{B}, ..., Eₙ are the exponents of n input values.

In one configuration, the highest exponent of an array of input values is determined and/or used for the input values of this array only. Therefore, the highest exponent can be determined for each array individually.

In one embodiment, the plurality of input values comprises a first array of input values. In one embodiment, the plurality of input values comprises a second array of input values. In particular, an input value of the first array is multiplied with an input value of the second array, for example in each multiplication.

In particular, each input value of the first array is multiplied with a respective input value of the second array.

In other words, multiplication is performed element-wise. The arrays can be regarded as input vectors. The method can be referred to as vector MAC method. Up to now, vector MAC methods have not been performed using a floating-point number system.

In one configuration, the method is an inference method or part of an inference method of a machine-learning model. In one configuration, the method is a training method or part of a training method of a machine-learning model.

During inference, high workloads may occur which can be handled particularly efficiently using the described number format.

In one configuration, the method is a real-time method. Real time means that results are produced and/or output substantially directly, i.e., without significant delay.

In one embodiment, the method is a real-time inference method.

A further aspect of the invention is a computer-implemented machine-learning method, comprising the steps: optionally accessing a plurality of input values, the input values being coded in a floating-point number format having an exponent and a mantissa, performing multiplications to obtain products, aligning mantissas to a common exponent, and/or performing at least one addition to obtain a sum. All embodiments, features and advantages of the method described above may also apply to this method and vice versa.

A further aspect of the invention is a computer program comprising instructions, which, when executed on a computer, perform the method according to the invention. All embodiments, features and advantages of the methods described above may also apply to the computer program and vice versa.

Computer is a broad term. A computer in the sense of the invention is an electronic machine that can be programmed to automatically carry out sequences of arithmetic or logical operations (computation), in particular programs. In particular, the computer comprises at least one processing element, typically a microprocessor, and a computer memory, such as a semiconductor memory chips. A computer can also be referred to as computing unit.

A further aspect of the invention is a computer-readable medium, comprising instructions which, when executed on a computer, perform the method according to the invention. A further aspect of the invention is a data carrier, comprising instructions which, when executed on a computer, perform the method according to the invention. A further aspect of the invention is a data carrier signal, comprising instructions which, when executed on a computer, perform the method according to the invention. All embodiments, features and advantages of the number format, the methods, the use and the computer program described above may also apply to these aspects and vice versa.

A further aspect of the invention is a multiply-accumulate (MAC) unit for machine-learning applications. In particular, the MAC unit comprises an input buffer for storing input values coded in a floating-point number format having an exponent and a mantissa. The MAC unit may comprise a multiplication unit for performing multiplications to obtain products, in particular for multiplying the input values to obtain products. The MAC unit may comprise an alignment unit for aligning mantissas to a common exponent, in particular for transforming the products by aligning the mantissas of the products. The MAC unit may comprise an adding unit for performing at least one addition to obtain a sum, in particular for adding the products having aligned mantissas. In particular, the MAC unit comprises a normalizing unit for normalizing the sum to obtain a floating-point value. All embodiments, features and advantages of the aspects described above may also apply to the MAC unit and vice versa. The MAC unit ensures a high throughput and low energy requirements.

The input buffer is used to temporarily store the input values, in particular 5-bit floating-point input values. In one configuration, the input buffer is configured to store at least 2 n 5-bit floating-point values, in particular exactly 2 n 5-bit floating-point values.

In particular, the alignment unit is configured to align at least two mantissas, in particular all mantissas, at the same time.

In one configuration, the multiply-accumulate unit further comprises a control unit for controlling the multiply-accumulate operation, managing data flow and/or execution sequencing.

In one configuration, the multiply-accumulate unit, in particular the adding unit, comprises a pipeline register for registering and/or storing intermediate values. Reference is made to the above description. The adding unit may be or comprise a carry-save adder.

A further aspect of the invention is electronic device, comprising the multiply-accumulate unit according to the invention. All embodiments, features and advantages of the aspects described above may also apply to the electronic device and vice versa

In one embodiment, the electronic device is a machine-learning accelerator. A machine-learning accelerator, also known as a neural processing unit, is a specialized hardware accelerator or computer system designed to accelerate artificial intelligence and machine learning applications.

In one embodiment, the electronic device is an application-specific integrated circuit. An application-specific integrated circuit provides highly optimized computation tailored specifically for the concrete workload, such as during operation of a Convolutional Neural Network (CNN).

In one embodiment, the electronic device is an edge-computing device. In edge computing, computing and data storage are brought closer to the data sources or to where requests are made. In comparison to cloud servers, for example, edge-computing devices, also referred to as edge devices, are devices that are closer to the data sources, data destinations and/or to the user. This reduces latency compared to centralized data centers. Edge computing occurs outside the cloud, at the network's edge, particularly for applications which need immediate data processing. In particular, an edge device is a standalone unit which performs operations itself, for example AI applications. The edge device may be an IoT device.

A further aspect of the invention is an electronic device, comprising a processor and a computer program or a computer-readable medium comprising instructions which, when executed on the processor, performs the method according to the invention. All embodiments, features and advantages of the aspects described above may also apply to this electronic device and vice versa

### Example:

In one exemplary configuration, a vector MAC unit which may be 8 wide using a 5-bit number system is implemented as follows (using the programming language C)

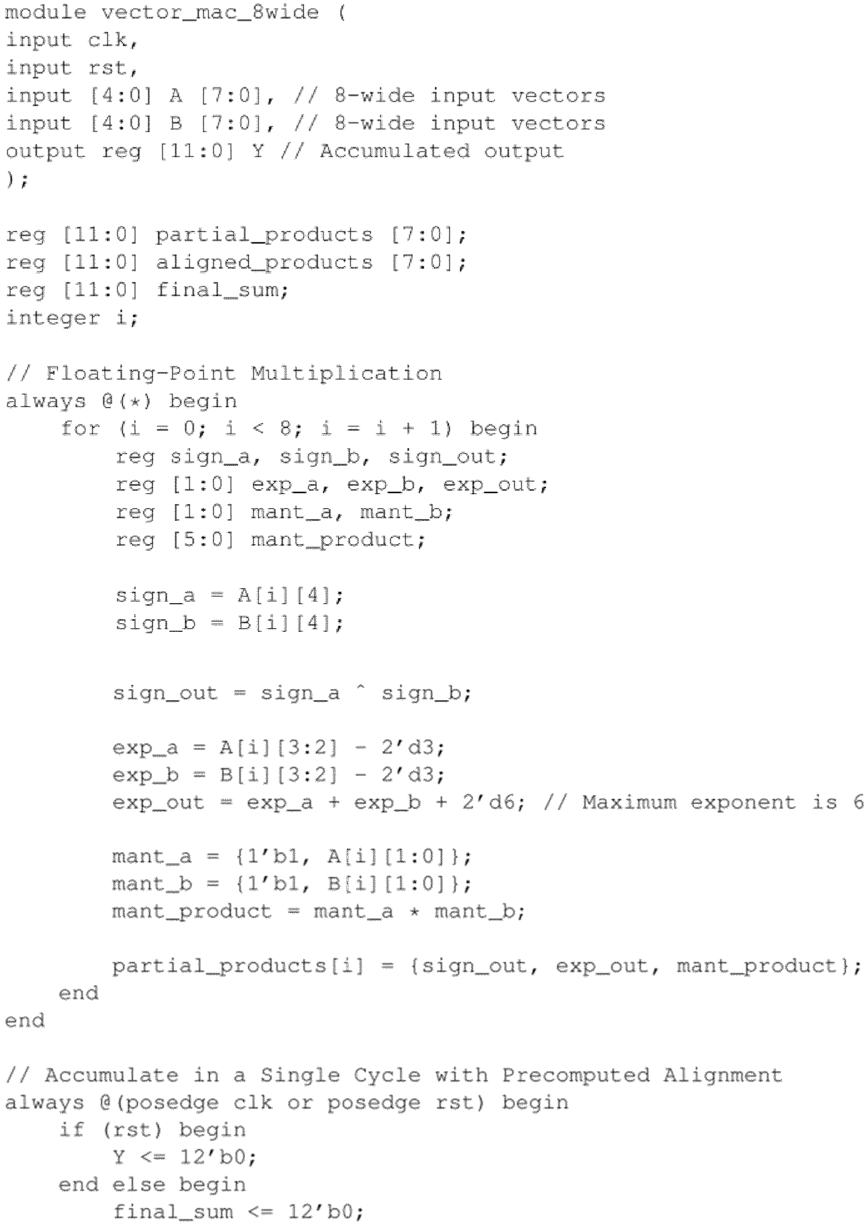

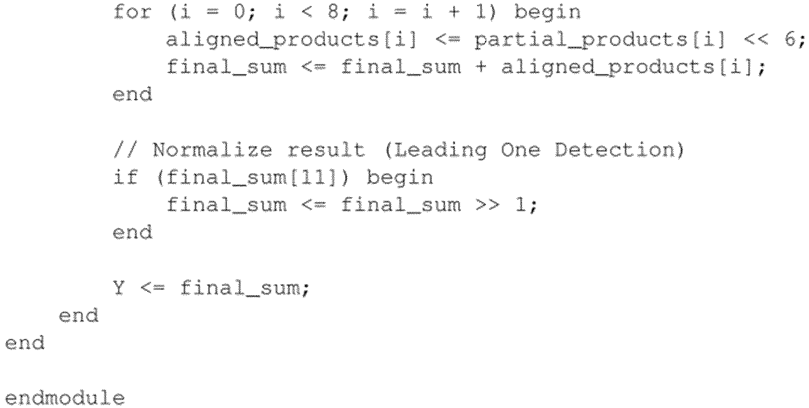

In the following, exemplary embodiments of the invention are shown using figures. The features of the figures can be combined individually or in combination with other features. The figures are not limiting.

The figures show:
- Figure 1:: a first schematic representation of a multiply-accumulate method,
- Figure 2:: a second schematic representation of a multiply-accumulate method;
- Figure 3:: a schematic representation of a number format and an electronic device;
- Figure 4:: a schematic representation of a deep neural network;
- Figure 5:: a computer program, a computer-readable medium, a data carrier, or a data carrier signal,
- Figure 6:: a schematic view of a multiply-accumulate unit, and
- Figure 7:: a schematic view of an electronic device.

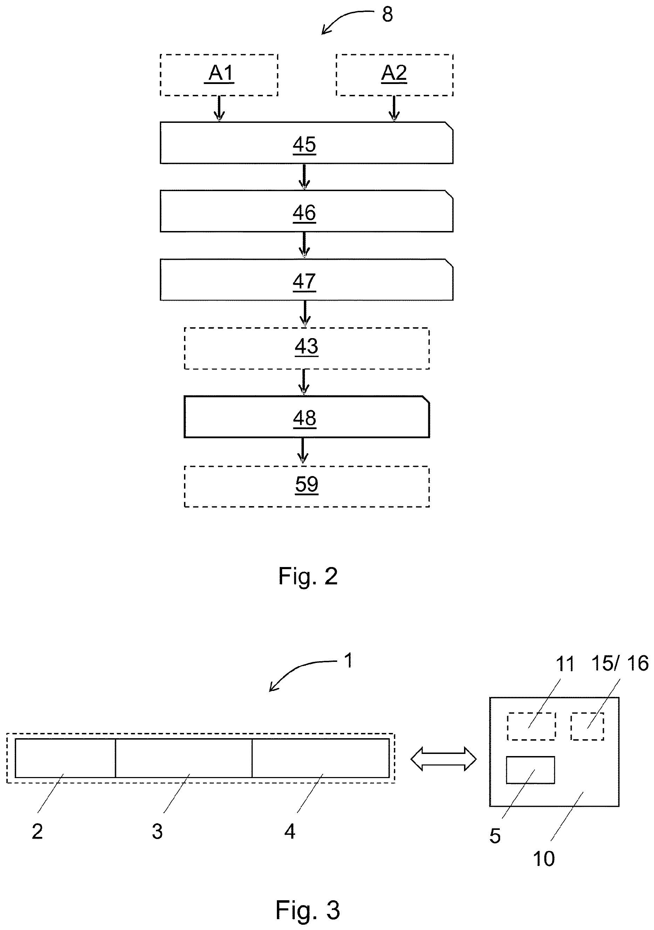

Figure 1 schematically shows a multiply-accumulate method 8 according to the invention. The method may comprise accessing 44 the input values 40. Preferably, input values 40 are in a floating-point number format. Typically, there are two input vectors which both have n values (see also Figure 2). In a multiplication step 45, input values 40 are multiplied in pairs using multipliers 42. Preferably, the resulting products are in the floating-point number format. Three small circles show that a higher number of input values and multiplications 45 than shown are typically present.

The resulting products are subjected to an aligning step 46, in which the mantissas of the products are aligned to a common exponent. In particular, the highest possible exponent or the highest exponent present in the products is used.

The products with aligned mantissas are added in an addition step 47 in pairs using adders 42. An adder tree results. Three small circles show that a higher number of additions 47 is typically performed. A sum 43 of all products with aligned mantissas is calculated. Preferably, each intermediate sum and the total sum are in the floating-point number format. Due to the multiplication and/or addition operations, the sum comprises a high number of mantissa bits and exponents bits. For example to reduce the number of mantissa bits and exponent bits back to the initially used floating-point number format, a normalizing step 48 may be performed. A final output value 59 results.

After the adder tree, the format depends on the format and scaling of input operands, which are in particular 5-bit floats, whether pre-alignment to a common exponent has been performed, which bitwidth is internally used to represent intermediate products and/or accumulations, and whether final normalization has been performed. In case the input values are in a preferable 5-bit floating-point format, they have 1 sign bit, 2 exponent bits and 2 mantissa bits. Mantissas are typically normalized with an implicit leading 1. Thus, there is effectively a mantissa precision of 3 bits, and a total bitwidth of 6 bits. Typically, exponents are biased, in particular asymmetrically. If exponents are pre-aligned, products can be added directly. Products are not normalized during the process, until the final and only normalizing step in the end.

Multiplying two 3-bit input values yields a 6-bit product. Accumulating or adding n 6-bit products further increases the bitwidth of the sum. The width can be calculated as [log₂(n)]+12. For example, for n = 8, 15 bits may result and for n = 16, 18 bits may result.

Figure 2 shows a second schematic view of individual steps of the method 8. Optional steps are shown with dashed lines. To avoid repetition, reference is also made to the above description of Figure 1. A first array A1 and a second array A2 serve as input values. Multiplications 45 are performed, followed by aligning 46 and addition 47. A sum 43 results, which is subjected to normalizing 48. The final output value 59 results.

Figure 3 shows on the left-hand side a schematic representation of the computer-implemented floating-point number format 1 which may preferably be used. The number format 1 comprises a sign 2, a mantissa 3 and an exponent 4. By way of example, the size of the respective fields shows the storage space of the single components. In particular, the sign 2 has 1 bit. In particular, the mantissa 3 has 2 bits. In particular, the exponent 4 has two bits. The exponent 3 is asymmetrically biased using a bias which is preferably not included in the number format 1 itself.

On the right-hand side, an electronic device 10 is schematically shown. In particular, the electronic device 10 interacts with the number format in such a way that calculations are performed by the electronic device 10 using the number format. Preferably, the multiply-accumulate unit and/or the electronic device includes the bias 5, for example in a hardwired and/or electronically stored way. In this case, an electronic device 10 having the bias 5 is required for interpreting the value stored in the number format.

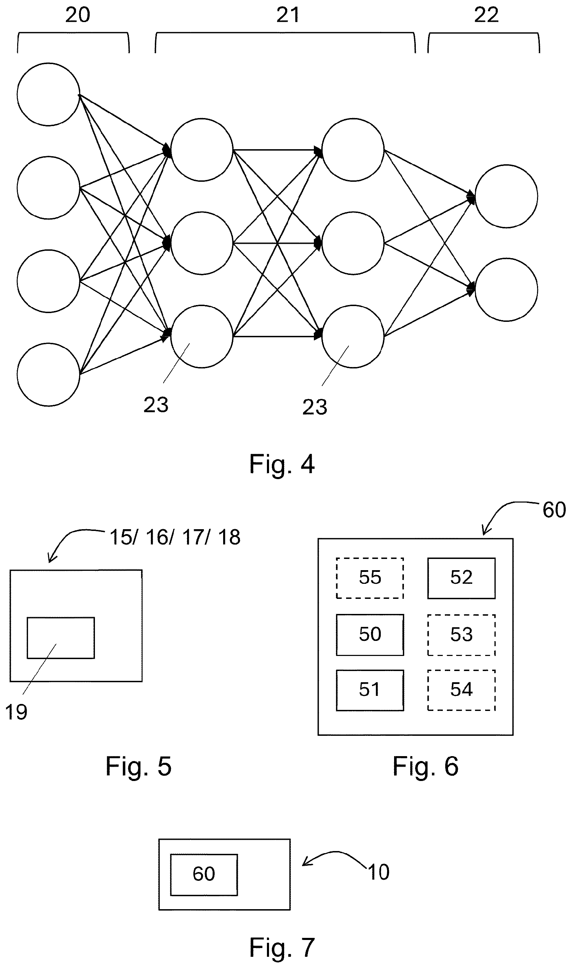

The electronic device 10, which is an individual aspect of the invention, in particular also comprises a processor 11. The electronic device 10 may further comprise a computer program 15 and/or a computer-readable medium 16 comprising instructions, which, when executed on the processor, performs a calculation using the floating-point number format 1. The computer program 15 and the computer-readable medium 16 are also depicted in Figure 5.

Figure 4 shows a simplified schematic of a deep neural network. There is an input layer 20 into which input data or raw data is input. There is a number of hidden layers 21 and there is an output layer 22 through which data is output. By way of example, only two hidden layers 21 are shown. However, deep neural networks usually have far more hidden layers 21, in particular more than hundreds or thousands of hidden layers 21. Each layer 20, 21, 22 comprises artificial neurons 23 which act as nodes. Neurons 23 apply a transformation of their inputs and pass processed data to the next layer.

Neurons 23 of the input layer 20 correspond to features of the input, such as pixel intensities in an image, words in a sentence of numerical attributes in structured data, for example. In particular, neurons 23 in the hidden layers 21 perform non-linear transformations by applying activation functions to weighed sums of inputs. Deeper networks with multiple hidden layers 21 can extract hierarchical and abstract features from raw data, for example. The output layer 22 produces the desired result depending on the specific task, such as a prediction or classification result. For classification tasks, the output layer typically employs a softmax function to generate probabilities, while for regression tasks, a linear activation function may be used.

The connectivity between neurons is governed by weights, which determine the influence of each input on the neuron's output. Bias terms may also be included to allow for flexible transformations. Weights are adapted or optimized during a learning phase. During forward propagation, for example, input data passes through the network layer by layer. At each neuron 23, a weighed sum of inputs is computed, followed by the application of an activation function. Different activation functions may be used, such as Sigmoid, ReLU (Rectified Linear Unit) or Tanh. In particular, the activation function used introduces non-linearity, thus enabling the network to learn complex mappings.

Loss functions may be used to evaluate network performance. Loss functions quantify the error between the predicted and actual outputs. Once the loss is computed, gradient-based optimization algorithms adjust the weights using back-propagation. This may involve computing gradients of the loss with respect to each weight using the chain rule of differentiation and updating weights.

In particular, a training set of values is used for training, in particular updating model weights through back-propagation. In particular, a validation set is used for validation, in particular for tuning hyperparameters and/or monitoring performance, e.g., to prevent overfitting. In particular, a test set is used to evaluate the final model's performance on different (unseen) data.

Each of the mentioned calculations and functions, alone or in any combination, may be part of the method according to the invention.

Figure 5 shows a computer program 15, a computer-readable medium 16, a data carrier 17, or a data carrier signal 18, comprising instructions 19 which, when executed on a computer, perform a calculation using the floating-point number format according to the invention.

Figure 6 schematically shows a multiply-accumulate unit 60, in particular for machine-learning applications. Optional features are shown with dashed lines. The multiply-accumulate unit 60 may comprise an input buffer 55 for storing input values stored in a floating-point number format, a multiplication unit 50 for performing multiplications to obtain products, an alignment unit 51 to align mantissas to a common exponent, an adding unit 52 to perform additions to obtain a sum, a normalizing unit 53 to normalize the sum to obtain a floating-point value and/or a determining unit 54 to determine the highest exponent of the input values.

Figure 7 schematically shows an electronic device 10 comprising the multiply-accumulate unit 60. The electronic device 10 may be an application-specific integrated circuit (ASIC), a machine-learning accelerator and/or an edge-computing device.

**List of Reference Signs**

| | |
|---|---|
| Number format | 1 |
| Sign | 2 |
| Exponent | 3 |
| Mantissa | 4 |
| Bias | 5 |
| Method | 8 |
| Electronic device | 10 |
| Processor | 11 |
| Computer program | 15 |
| Computer-readable medium | 16 |
| Data carrier | 17 |
| Data carrier signal | 18 |
| Instructions | 19 |
| Input layer | 20 |
| Hidden layer | 21 |
| Output layer | 22 |
| Neuron | 23 |
| Input Value | 40 |
| Multiplier | 41 |
| Adder | 42 |
| Sum | 43 |
| Accessing | 44 |
| Multiplication | 45 |
| Aligning | 46 |
| Addition | 47 |
| Normalizing | 48 |
| Multiplication unit | 50 |
| Alignment unit | 51 |
| Adding unit | 52 |
| Normalizing unit | 53 |
| Determining unit | 54 |
| Input buffer | 55 |
| Output value | 59 |
| Multiply-Accumulate unit | 60 |
| First Array | A1 |
| Second Array | A2 |

## Claims

1. A computer-implemented multiply-accumulate method (8) for machine learning, comprising the steps:
- Accessing (44) a plurality of input values (40), the input values (40) being coded in a floating-point number format (1) having an exponent (3) and a mantissa (4),
- Performing multiplications (45) to obtain products,
- Aligning (46) mantissas (4) to a common exponent (3),
- Performing at least one addition (47) to obtain a sum (43).

2. The method (8) of the preceding claim, wherein addition (47) is performed in successive addition steps, wherein each addition step comprises pairwise addition.

3. The method (8) of one of the preceding claims, further comprising normalizing (48) the sum (43) to obtain a normalized floating-point value.

4. The method (8) of one of the preceding claims, wherein aligning (46) the mantissas (4) is performed by aligning (46) the mantissas (4) of the products after multiplication (45), wherein after the aligning (46), the products having aligned mantissas are added (47) to obtain a sum (43).

5. The method (8) of one of the preceding claims, wherein, in the floating-point number format (1), the number of exponent (3) bits is at most 4, in particular 2, and the number of mantissa (4) bits is at most 4, in particular 2.

6. The method (8) of one of the preceding claims, wherein the exponent (3) of the floating-point number format (1) is asymmetrically biased.

7. The method (8) of one of the preceding claims, further comprising: determining the highest exponent (3) of the input values (40), wherein the mantissas (4) are aligned (46) to the determined highest exponent (3).

8. The method (8) of one of the preceding claims, wherein the plurality of input values (40) comprises a first array (A1) of input values (40) and a second array (A2) of input values (40), wherein in each multiplication (45), an input value (40) of the first array (A1) is multiplied with an input value (40) of the second array (A2).

9. The method (8) of one of the preceding claims, wherein the method (8) is an inference method of a machine-learning model or a training method of a machine-learning model.

10. A computer program (15) comprising instructions (19), which, when executed on a computer, perform the method (8) according to one of the claims 1 to 9.

11. A computer-readable medium (16) or a data carrier (17) or a data carrier signal (18), comprising instructions (19), which, when executed on a computer, perform the method (8) according to one of the claims 1 to 9.

12. A multiply-accumulate unit (60) for machine-learning applications, comprising:
- Optionally an input buffer (55) for storing input values (40) coded in a floating-point number format (1) having an exponent (3) and a mantissa (4),
- A multiplication unit (50) for performing multiplications (45) to obtain products,
- An alignment unit (51) for aligning mantissas (4) to a common exponent (3),
- An adding unit (52) for performing at least one addition (47) to obtain a sum (43),
- Optionally a normalizing unit (53) for normalizing (48) the sum (43) to obtain a floating-point value.

13. An electronic device (10), comprising the multiply-accumulate unit (60) of the preceding claim.

14. The electronic device (10) according to the preceding claim, wherein the electronic device (10) is an application-specific integrated circuit and/or a machine-learning accelerator.

15. An electronic device (10) according to the preceding claim, wherein the electronic device (10) is an edge-computing device.
